# EUROPEAN PATENT SPECIFICATION

(11) **EP 3 227 367 B1**
(45) Date of publication and mention of the grant of the patent: **07.08.2019**
(21) Application number: 15812979.1
(22) Date of filing: 02.12.2015
(51) Int. Cl.: C08K 3/00, C08K 3/22, C08L 15/02, C08L 83/04

(54) **FLUOROSILICONE ELASTOMERS COMPRISING YELLOW IRON OXIDE**
FLUORSILIKONELASTOMERE MIT EISENOXIDGELB
ÉLASTOMÈRES DE TYPE FLUOROSILICONE COMPRENANT DE L'OXYDE DE FER JAUNE

(30) Priority: 02.12.2014 GB 201421521
(43) Date of publication of application: 11.10.2017
(73) Proprietor: Dow Silicones Corporation, Midland, MI 48686-0994 (US)
(72) Inventor: DRAKE, Robert, Penarth South Glamorgan CF64 2TW (GB); LUQUE ALVAREZ, Jesus, Cardiff South Glamorgan CF24 4AN (GB)
(74) Representative: Donlan, Andrew Michael
(86) International application number: PCT/EP2015/078327
(87) International publication number: WO 2016/087500

(56) References cited:
- WO-A1-2008/149121
- US-A- 5 340 866
- US-A1- 2010 166 996
- US-A1- 2010 179 266

## Description

### Technical Field

This disclosure relates to fluorosilicone elastomer base compositions containing a stabilizer that provide cured fluorosilicone elastomers having improved high temperature performance. The stabilizer comprises yellow iron oxide and optionally an acid acceptor. The stabilizer is particularly useful to prepare cured fluorosilicone elastomers for o-rings, connectors, and constructing automotive hoses, such as turbocharger hoses.

### Background

Automotive applications utilizing fluorosilicone rubber are constantly challenged to demonstrate performance improvements. Technology trends result in demands for ever increasing resistance to both heat and chemical exposure. For example, Western Europe continues to exhibit significant growth in turbo diesel passenger cars, at the expense of their gasoline equivalents. In the U.S., a similar growth has been experienced in the small truck market. The service temperatures of the hoses, especially turbo diesel engine hoses, are thus increasing. Likewise, improvements in fuel and oil resistance are sought. Typically, the hoses used in automotive applications have a multilayer structure consisting of fabric reinforcement encapsulated with silicone rubber (classified as VMQ elastomer by the American Society of Test Methods (ASTM)) and lined internally with a layer of fluorosilicone elastomer (FVMQ). Generally, the heat stability of fluorosilicone elastomers (FVMQ) is less than silicone elastomers (that is non-fluoro containing silicone elastomer or rubber such as VMQ).

US5340866 discloses a heat curable fluorosilicone rubber composition having improved heat stability without a sacrifice in physical properties provided by using critical amounts of cerium hydroxide and red iron oxide in the preparation of the curable fluorosilicone composition.

EP2155823 discloses fluorosilicone elastomer base compositions containing a stabilizer that provides cured fluorosilicone elastomers having improved high temperature performance. The stabilizer comprises carbon black, calcium carbonate, iron oxide, and optionally zinc oxide. The stabilizer is particularly useful to prepare cured fluorosilicone elastomers for o-rings, connectors, and constructing automotive hosing. WO2008/149121 discloses a mounted connector which in one embodiment comprises damping member 43 which is made from a fluorosilicone rubber. The rubber formulation comprises
100 parts by weight fluorosilicone gum,
0.75 parts by weight of peroxide cross-linking agent,
13.65 parts by weight of fumed silica filler, 5 parts by weight of colorant (red, black and yellow iron oxides) and
8 parts by weight of plasticiser.

JP03466272 discloses hardenable organo-polysiloxane composition comprising yellow iron oxide fine powder.

There is a need to improve the heat stability of the fluorosilicone elastomers used in automotive applications, and in particular for their use in o-rings, connectors, and in the construction of hoses, such as turbocharger hoses. While heat stabilizers, such as cerium hydrate or hydroxides, red iron oxide, calcium carbonate, carbon black and zinc oxide used alone or in combination, are known to provide thermal resistance, to such silicone elastomer formulations, there is a need to improve thermal resistance to even higher temperatures.

The present inventors have discovered a stabilizer composition, that when added to silicone elastomer base compositions, provide improved heat aging properties to the cured silicone elastomer vs. similar silicone elastomers using conventional heat stabilizer components. When the silicone elastomer base is a fluorosilicone elastomer base, the stabilizer composition provides improved heat aging of the resulting cured fluorosilicone elastomer. The improved fluorosilicone elastomers are particularly useful in various automotive applications, such as o-rings, connectors, or an inner liner for silicone rubber based turbocharger hoses.

### Summary

This disclosure relates to a method for improving the heat stability or heat resistance of a cured fluorosilicone elastomer as described in claim 1, comprising:
I) mixing a stabilizer with a fluorosilicone elastomer base and a cure agent, to form a curable fluorosilicone elastomer composition; said stabilizer comprising;
   B1) yellow iron oxide, and
   B2) optionally, an acid acceptor,
II) vulcanizing the fluorosilicone elastomer composition containing the stabilizer. The fluorosilicone elastomer base comprises;
   A1) a perfluoroalkyl polydiorganopolysiloxane,
   A2) a reinforcing filler,
   A3) an optional non fluorinated polydiorganopolysiloxane
   A4) an optional cerium hydroxide or cerium hydrate, and
   A5) an optional adhesion promoter.

The curable fluorosilicone elastomer composition may comprise:
A) 67.0 - 99.4 weight % of the fluorosilicone elastomer base,
B) 0.5 - 30.0 weight % of the stabilizer comprising:
   B1) yellow iron oxide, and
   B2) optionally, an acid acceptor,
C) 0.1 - 3.0 wt% of a cure agent,
with the proviso the wt % of all components sum to 100 wt %.

This disclosure also relates to the resulting cured fluorosilicone elastomers and articles of manufacture prepared from the cured fluorosilicone elastomers. The fluorosilicone elastomers may also be referred to as fluorinated silicone elastomers.

This disclosure further relates to the use of a stabilizer comprising
B1) yellow iron oxide, and
B2) optionally, an acid acceptor,
in a curable fluorosilicone elastomer composition for improving the heat stability or heat resistance of a cured fluorosilicone elastomer cured/vulcanized from said curable fluorosilicone elastomer composition.

### Detailed Description

### The fluorosilicone elastomer base (Component A)

Component A) in the present disclosure is a fluorosilicone elastomer base as described above. As used herein, a "fluorosilicone elastomer base" is a silicone composition which, when subsequently cured or vulcanized, provides a fluorosilicone elastomer or rubber. Silicone refers to organopolysiloxanes containing siloxane units independently selected from (R₃SiO_{0.5}), (HOR₂SiO_{0.5}), (R₂SiO), (RSiO_{1.5}), or (SiO₂) siloxy units, where R may be any monovalent organic group or hydrogen. These siloxy units can be combined in various manners to form cyclic, linear, or branched structures. Fluorosilicone as used herein refers to an organopolysiloxane wherein at least one R substituent contains a fluorine atom, for example such as a perfluoroalkyl group designated as R^{f}.

Component A) is a fluorosilicone elastomer base comprising;
A1) a perfluoroalkyl polydiorganopolysiloxane,
A2) a reinforcing filler,
A3) an optional non fluorinated polydiorganopolysiloxane,
A4) an optional cerium hydroxide or cerium hydrate, and
A5) an optional adhesion promoter.
each of which are described in more detail below.

Fluorosilicone elastomer bases are known in the art and comprise a perfluoroalkyl polydiorganosiloxane (A1), a reinforcing filler (A2), and optionally a non-fluorinated polydioroganosiloxane (A3). Typically, at least 90 mole percent of the perfluoroalkyl-containing polydiorganosiloxane repeating units in A1 are described by formula R^{f}CH₂CH₂(CH₃)SiO_{2/2}, and up to 10 mole percent of the repeating units are described by formula R¹₂SiO, R^{f} is a perfluoroalkyl group containing 1 to 10 carbon atoms, and each R¹ is independently selected from methyl, phenyl and vinyl. The perfluoroalkyl group is typically CF₃, C₂F₅, C₃F₇, C₄F₉, C₇F₁₅ and C₁₀F₂₁. The endblocking groups of the perfluoroalkyl-containing polydiorganosiloxane are hydroxyl or triorganosilyl, e.g., trimethylsilyl or dimethylvinylsilyl. The choice of repeating units and/or endblocking groups is determined by the desired curing reaction to convert the fluorosilicone elastomer base to a cured fluorosilicone elastomer. For example, when the elastomer base is cured by an organohydrogensiloxane-addition reaction catalyst combination or by a vinyl specific peroxide, the endblocking groups or the polydiorganosiloxane repeating units will contain alkenyl radicals such as vinyl groups. The perfluoroalkyl-containing polydiorganosiloxane typically has a viscosity of 1000 Pa.s at 25°C and 1 Hz, or above for a liquid fluorosilicone elastomer base and, alternatively, greater than 10,000 Pa.s at 25°C and 1 Hz using a cone and plate rheometer, so that it has a gum-like consistency for high consistency fluorosilicone elastomer bases. Perfluoroalkyl-containing polydiorganosiloxanes useful in the present method and composition are commercially available. One perfluoroalkyl-containing polydiorganosiloxane useful in our invention is described in US 3,179,619. Another method of making these polydiorganosiloxanes is disclosed in US 3,002,951. The latter U.S. Patent teaches a method of preparing from cyclic siloxane trimers, an high molecular weight perfluoroalkyl-containing polydiorganosiloxane having perfluoroalkyl radicals bonded to silicon atoms. The cyclic siloxane trimers used in this latter U.S. Patent are shown in US 2,979, 519. Other methods of making perfluoroalkyl-containing polydiorganosiloxanes are disclosed in US 3,274,153; US 3,294,740 and US 3,373,138.

The perfluoroalkyl-containing polydiorganosiloxane may be a single type of homopolymer or copolymer or it may be a mixture of various homopolymers, copolymers or homopolymers and copolymers. Typically, the perfluoroalkyl-containing polydiorganosiloxane is an hydroxyl-endblocked or vinyl-endblocked polymethyl-(3,3,3-trifluoropropyl)siloxane, wherein at least 99 mol percent of the repeating units are methyl-3,3,3-trifluoropropylsiloxy.

The amount of the perfluoroalkyl polydiorganopolysiloxane used in the curable fluorosilicone elastomer composition may vary, but typically ranges from 27.5 to 96.9, alternatively 50 to 95, alternatively 60 to 90, alternatively 70 to 85, weight percent of the composition.

The reinforcing fillers of the fluorosilicone elastomer base are typically a silica. Many forms of silica are commercially available such as fumed silica, precipitated silica, silica aerogel and silica xerogel. Typically, the reinforcing silica filler has a surface area of at least 100 m²/g and, alternatively, at least 200 m²/g. The reinforcing silica filler may be added in any quantity which provides the desired reinforcement without adversely affecting other properties of the elastomer. Generally, quantities of 5-100 parts of reinforcing silica filler per 100 parts of perfluoroalkyl-containing polydiorganosiloxane are useful. Thus, the curable fluorosilicone elastomer composition may contain 2.5 - 47.5 weight percent of the reinforcing filler.

Typically the reinforcing silica filler is treated with an anticrepe agent. This agent may be added to treat the reinforcing silica filler before it is added to the perfluoroalkyl-containing polydiorganosiloxane, or it may be added (in situ) to treat the reinforcing silica filler while the perfluoroalkyl-containing polydiorganosiloxane is being mixed with the reinforcing silica filler. Examples of anticrepe agents include the following and their mixtures: silanes, e.g., trimethylchlorosilane, dimethyldichlorosilane, methyltrichlorosilane, methyltrimethoxysilane and 3,3,3-trifluoropropyltrimethoxysilane; silazanes, e.g., tetramethyldivinyldisilazane, hexamethyldisilazane, and tetramethydi(3,3,3-trifluoropropyl)disilazane; cyclic siloxanes, e.g., cyclic diorganosiloxanes; and low molecular weight polydiorganosiloxanes, e.g., hydroxyl-endblocked polydimethylsiloxane, hydroxyl-endblocked polymethylvinylsiloxane, hydroxyl-endblocked polymethyl(3,3,3-trifluoropropyl)siloxane and copolymers of these silanes, silazanes or siloxanes. The preferred anticrepe agents are low molecular weight polydiorganosiloxanes and silazanes. The anticrepe agents may be added in any quantity which will reduce crepe hardening and will not adversely affect the properties of the elastomer. Typical quantities are in a range of 0.1 to 15 weight percent of the fluorosilicone elastomer base.

Component A3) is an optional non-fluorinated polydiorganopolysiloxane. Typically, the optional non-fluorinated polydiorganosiloxane is a polydiorganosiloxane gum or polymer wherein at least 50 percent of the total organic substituents bonded to silicon atoms are methyl groups. Other organic substituents in the polydiorganosiloxane may be vinyl or phenyl groups. When present, the vinyl groups should comprise no more than 2.5 percent of the total number of silicon-bonded substituents. Examples of component (A3) may include;
a dimethylvinylsiloxy-terminated dimethylpolysiloxane,
a dimethylvinylsiloxy-terminated copolymer of methylvinylsiloxane and dimethylsiloxane,
a silanol-terminated copolymer of methylvinylsiloxane and dimethylsiloxane,
a dimethylvinylsiloxy-terminated copolymer of methylphenylsiloxane and dimethylsiloxane, a dimethylvinylsiloxy-terminated copolymer of methylphenylsiloxane, methylvinylsiloxane, and dimethylsiloxane, a dimethylvinylsiloxy-terminated copolymer of diphenylsiloxane and dimethylsiloxane, a dimethylvinylsiloxy-terminated copolymer of diphenylsiloxane, methylvinylsiloxane, and dimethylsiloxane.

The choice of polydiorganosiloxane gum or polymer is determined by the fluorosilicone elastomer base consistency. Typically polydiorganosiloxane polymers are added to liquid forms of the fluorosilicone elastomer bases whereas high consistency fluorosilicone base forms can utilize both polydiorganosiloxane gums or polymers. Typically, the polydiorganosiloxane gums have a plasticity of at least 1.00 mm as measured by the Williams plastimeter, alternatively the gums have a plasticity within the range of from 1.25 to 1.85 mm.

The optional non-fluorinated polydiorganopolysiloxane, when present, may be used at an amount of from 0.1 to 10 weight % of the curable fluorosilicone elastomer composition.

Optional Component A4) is cerium hydroxide or cerium hydrate. The addition of cerium hydroxide or hydrate to silicone elastomer compositions for heat stabilization is known. However, such compositions have limited heat stability, typically to 200°C. The present stabilizer composition (component B) provides thermal stabilities typically in excess of 200°C when used alone or in conjunction with conventional heat stabilizers such as cerium hydroxide or hydrate. Cerium hydroxide or hydrate useful as component A4 include those cerium compounds having the formula Ce(OH)₄ • xH₂O [CAS registry number 12014-56-1].

The amount of cerium hydroxide or hydrate may vary, but typically ranges from 0.1 to 10 weight % of the silicone elastomer composition. To ensure the most uniform and optimum mixing, typically a "masterbatch" of the cerium hydroxide or hydrate component is prepared by mixing component A4 with a portion of the fluorosilicone base or non fluorinated polydiorganopolysiloxane (A1 or A3) component. The masterbatched cerium hydroxide or hydrate component may then be added to the fluorosilicone elastomer composition. Such masterbatched compositions that are commercially available and useful in the present compositions include SILASTIC ® HT-1 Modifier (Dow Corning Corporation, Midland, MI).

Component A5) is an optional adhesion promoter. When used the adhesion promoter is added to the silicone composition to improve adhesion of the fluorosilicone elastomer to other rubber or elastomeric components in an article of manufacture, such as a hose assembly. Alternatively, the adhesion promoter may be added to another composition or component in a manufactured article. For example, in a multi-layered hose construction, the adhesion promoter may be added to the silicone rubber component, which is in contact with the disclosed cured fluorosilicone elastomer compositions. The adhesion promoter may be selected from a fluoro-modified organohydrogenpolysiloxane having the general formula

(Me₃SiO)(MeHSiO)ₓ(R^{f}CH₂CH₂(Me)SiO)_{y}(SiMe₃)

where x and y may vary from 1 to 200, alternatively 5 to 100, or alternatively 10 to 50, Me is methyl, and R^{f} is a perfluoroalkyl group containing 1 to 10 carbon atoms as defined above. Commercially available fluoro-modified organohydrogenpolysiloxanes suitable as component A5 include; SYL-OFF ® Q2-7560 Crosslinker, and SYL-OFF ® SL-7561 Crosslinker (Dow Corning Corporation, Midland, MI). When present in the curable fluorosilicone elastomer composition, the amount of the adhesion promoter may vary, but typically ranges from 0.1 to 5, alternatively 0.5 to 5 weight percent of the total.

The fluorosilicone elastomer base may also include extending fillers, such as titanium dioxide, quartz, graphite, glass fibres and glass microspheres. The fluorosilicone elastomer base may also include pigments, colorants, flame retardants, additional heat stability additives, additives to improve compression set and other additives commonly used in the rubber art.

Representative fluorosilicone elastomer bases useful in the present disclosure are taught in US 3,179,619; US 4,882,368; US 5,081,172 and US 5,171,773.

### The Stabilizer

Component B) in the present disclosure is a stabilizer composition. As used herein, "stabilizer" refers to a certain combination of components (at least B1 and B2) added to a curable fluorosilicone elastomer composition for the purpose of improving either the heat stability or oil resistance of the subsequently cured fluorosilicone elastomer composition. The stabilizer comprises:
B1) yellow iron oxide, and
B2) optionally, an acid acceptor,
each of which are discussed in more detail below.

Component B1 is yellow iron oxide, also found as iron(III) oxide, iron(III) oxide-hydroxide, hydrated iron oxide, iron(III) hydroxide, or iron oxyhydroxide, also designated as CAS 51274-00-1, Pigment Yellow 42 or C.I. 77492. It is generally represented by formula: FeO*OH or FeO(OH)*mH₂O, wherein m is a positive number. The type and source of yellow iron oxide may vary. It is typically a fine powder of various polymorphic forms, having a particle size typically < 50 micrometers. Representative, non-limiting examples of iron oxide suitable as component B1 in the present disclosure include Bayferrox® 3920, Bayferrox® 3910; Bayferrox® 943, Bayferrox® 3950, Bayferrox® Yellow 420, Bayferrox® Yellow 920 (Lanxess Deutschland, GmbH, D-51369 Leverkusen, Germany), C.I. Pigment Yellow 42, Ariabel Yellow 300407, AZ 138; Cappoxyt Yellow 4214, Cappoxyt Yellow 4214C (Cappelle Pigments NV, Belgium), Tarox LL-XLO (TITAN KOGYO. JP, Japan); Mapico® Yellow 1050, Mapico® Yellow 5, Mapico® Yellow LL-XLO (Rockwood Pigments, 2051 Lynch Avenue, East St. Louis, IL, USA)

The process of manufacture of component B1 is not of particular importance, but may involve precipitation of ferric oxyhydroxide followed by purification through washing, drying and milling.

The stabilizer comprises 5 to 100 weight % of yellow iron oxide B1, alternatively 10 to 100 weight %, alternatively 20 to 100 weight %, compared to the total weight of the stabilizer component.

Optional component B2 is an acid acceptor. An acid acceptor is defined as material or compound capable of reaction with fluoric acid (HF). The acid acceptor may be selected from the group consisting of Group II metal carbonate, Group II metal oxide, Group II metal hydroxide, or mixtures thereof. Typically, the acid acceptor may be selected from the group comprising magnesium carbonate, calcium carbonate, calcium oxide, calcium hydroxide, or mixtures thereof. In some instances, the acid acceptor may be calcium carbonate.

The type and source of calcium carbonate may vary. Representative, non-limiting examples of the calcium carbonate can be found in summary articles of this class of materials such as in: Chemical Economics Handbook-SRI International 2007, Calcium Carbonate 724.6000A. Typically, the calcium carbonate is greater than 96 % CaCO₃ and the mean particle size is 5 - 6 micrometers. Representative, non-limiting examples of calcium carbonate include OMYA BLP®3 (OMYA, Orgon France), GAMA-SPERSE CS-11 (IMERYS, Paris France).

The stabilizer comprises 0 to 95 weight % of acid acceptor B2, alternatively 0 to 90 weight %, alternatively 0 to 80 weight %, compared to the total weight of the stabilizer component.

Optionally, the stabilizer may comprise carbon black. The type and source of carbon black may vary. Representative, non-limiting examples of the carbon black can be found in summary articles of this class of materials such as in: Chemical Economics Handbook-SRI International 2005, Carbon Black 731.3000A. Typically, the carbon black is amorphous, having a carbon content of at least 98 %, an average particle size of 0.05 micrometers, a specific surface area of at least 44 m²/g . Representative, non-limiting examples of carbon black include SUPERJET® Carbon Black (LB-1011) supplied by Elementis Pigments Inc., Fairview Heights, IL 62208; SR 511 supplied by Sid Richardson Carbon Co, 3560 W Market Street, Suite 420, Akron, OH 44333; and N330, N550, N762, N990 (Degussa Engineered Carbons, Parsippany, NJ 07054).

In some instances, carbon black may be used in amounts < 5 weight %, based on the total weight of the stabilizer. In further instances, carbon black may be avoided, that is, the stabilizer may contain 0 weight % of carbon black.

The amount of the stabilizer used in the curable fluorosilicone elastomer composition may vary of from 0.5 - 20 weight %, alternatively of from 1 to 10 weight %, alternatively of from 2 to 6 weight % of the total curable fluorosilicone elastomer composition.

The stabilizer typically comprises yellow iron oxide B1 and may additionally comprise acid acceptor B2. In some instances, the stabilizer may consist essentially of iron oxide B1, and the stabilizer may also consist essentially of a mixture of iron oxide B1 and acid acceptor B2. In yet further instances, the stabilizer may consist of iron oxide B1 alone, or it may consist of a combination of iron oxide B1 and acid acceptor B2.

The manner for how each component of the stabilizer is added and mixed in the curable fluorosilicone elastomer composition may vary. For example, a mixture of components B1 and B2 may be first made and admixed to the fluorosilicone elastomer base composition. Alternatively, each individual component may be added and mixed in any order directly into the curable fluorosilicone elastomer composition. To ensure the most uniform and optimum mixing, typically a "masterbatch" of each stabilizer component is prepared by adding the individual stabilizer component with a portion of the fluorosilicone base (A1 or A3) component. The masterbatched stabilizer component may then be added to the fluorosilicone elastomer composition individually. The masterbatched stabilizer components may also be mixed together before being added to the fluorosilicone elastomer composition. The mixing of each stabilizer component with the fluorosilicone elastomer base may thus be prepared by adding the individual stabilizer component (B1 or B2), or the premixed stabilizer components (B1 + B2), with a portion of the fluorosilicone elastomer base component, subsequently adding said portion of the fluorosilicone elastomer base comprising the individual or premixed stabilizer to the remainder of the fluorosilicone elastomer composition. Hence, the mixing of each stabilizer component (B1 and/or B2) with the fluorosilicone elastomer base may be undertaken by introducing one or both stabilizer components (B1 and/or B2) individually or in combination into one (or more) portion(s) of the fluorosilicone elastomer base component to form one (or more) masterbatch(es), and subsequently adding the or each masterbatch into the remainder of the fluorosilicone elastomer composition. The masterbatch technique is particularly useful for the addition of yellow iron oxide and optionally the acid acceptor. The amount of the stabilizer required for a particular application is easily determined by one skilled in the rubber art based on the selection of the fluorosilicone rubber base (A), the selection of the stabilizer composition (B), the heat stability requirements and the process selected for preparing the cured fluorosilicone elastomer. The stabilizer composition may affect the processability of the fluorosilicone elastomer base. However, techniques to overcome such factors affecting processability for added components similar to the present stabilizers are well known. Such techniques include, varying concentration, particle shape, and the surface activity of such components in the silicone elastomer base.

### C) The cure agent

A curing agent is added to the fluorosilicone elastomer base containing the stabilizer to effect formation of a cured fluorosilicone elastomer. The preferred curing agents are organic peroxides which are well-known in the silicone art as curing agents. Specific examples of suitable peroxides which may be used according to the method of the present invention include: 2,5-dimethyl-2,5-di(tert-butylperoxy)hexane; benzoyl peroxide; dicumyl peroxide; t-butyl peroxy O-toluate; cyclic peroxyketal; t-butyl hydroperoxide; t-butyl peroxypivalate; lauroyl peroxide; t-amyl peroxy 2-ethylhexanoate; vinyltris(t-butyl peroxy)silane; di-t-butyl peroxide, 1,3-bis(t-butylperoxyisopropyl) benzene; di-(2,4 dichlorobenzoyl) peroxide; 2,2,4-trimethylpentyl-2-hydroperoxide; 2,5-bis(t-butylperoxy)-2,5-dimethylhexyne-3, t-butyl-peroxy-3,5,5-trimethylhexanoate; cumene hydroperoxide; t-butyl peroxybenzoate; and diisopropylbenzene mono hydroperoxide; Di(4 methylbenzoyl)-peroxide; 1,1-Bis(t-butylperoxy)-3,3,5-trimethylcyclohexane; t-Butylperoxy-3,5,5-trimethylhexanoate; t-Butylperoxy-(2-ethylhexyl)carbonate. The amount of organic peroxide is not critical. A useful amount is in a range of 0.1 to 3 weight percent of the fluorosilicone elastomer base containing the stabilizer.

The fluorosilicone elastomer base containing the stabilizer is also curable by other curing agents known in the art, for example, an organohydrogenpolysiloxane/addition reaction catalyst combination. The organohydrogenpolysiloxane of this combination must contain at least 2 silicon-bonded hydrogen atoms in each molecule. Examples of the organohydrogenpolysiloxane include trimethylsiloxy-terminated dimethylsiloxanemethylhydrogensiloxane copolymers, hydrogendimethylsiloxy terminated dimethylsiloxanemethylhydrogensiloxane copolymers and similar compounds. The molecular structure may be straight-chained, branched or cyclic and its degree of polymerization (DP) should be at least 2. Examples of the addition reaction catalyst include platinum and platinum compound catalysts, e.g., platinum black, chloroplatinic acid, platinum tetrachloride, chloroplatinic acid/olefin complexes, chloroplatinic acid/methylvinylsiloxane complexes and similar compounds; or a micro particulate thermoplastic catalyst which contains a platinum or platinum compound catalyst as described above; rhodium compounds and cobalt carbonyl.

In one embodiment the curable fluorosilicone elastomer composition comprises:
A1) 27.5 to 96.9 weight % of perfluoroalkyl polydiorganopolysiloxane,
A2) 2.5 to 47.5 weight % of reinforcing filler,
A3) optionally 0.1 to 10 weight % of non fluorinated polydiorganopolysiloxane,
A4) optionally 0.1 to 10 weight % of cerium hydroxide or cerium hydrate,
A5) optionally 0.1 to 5 weight % of adhesion promoter
   and
B1) 0.5 to 30, alternatively 1 to 10, alternatively 1 to 5, weight % of yellow iron oxide,
B2) 0 to 27, alternatively 0.2 to 10, alternatively 0.5 to 5 weight % of acid acceptor, C) 0.1 - 3 weight % of cure agent,
with the proviso the wt % of all components sum to 100 wt %. Each of the components are described above. In a yet another embodiment, the curable fluorosilicone elastomer composition further comprises an adhesion promoter selected from a fluoro-modified organohydrogenpolysiloxane having the average formula (Me₃SiO)(MeHSiO)ₓ(R^{f}CH₂CH₂(Me)SiO)_{y}(SiMe₃), as described above.

The temperature range for curing the fluorosilicone elastomer base may be room temperature or above. A typical temperature range is 50°C to 250°C. The temperature range should be sufficient to activate the catalyst used.

A cured fluorosilicone elastomer may be produced by the present method, that is, by mixing the fluorosilicone elastomer composition detailed above, forming the composition to a desired configuration, and vulcanizing to yield a cured fluorosilicone elastomer.

The fluorosilicone elastomer composition may be formed to the desired configuration by suitable methods such as compression moulding, injection moulding, transfer moulding, calendaring and extruding.

After forming to the desired configuration, the formed fluorosilicone elastomer is vulcanized, which effects curing of the composition. When the fluorosilicone elastomer composition contains organic peroxide vulcanizing agent, the composition is vulcanized by heating to a temperature sufficiently high to activate the organic peroxide catalyst. When moulding, the temperature is typically from 100° C to 180°C for times of 15 minutes or less. When curing in hot air, as in an extruding operation, the air temperature may be as high as 300°C with exposure times as short as 10 to 60 seconds.

The cured fluorosilicone elastomer produced by the present method exhibits improved retention of physical properties after exposure to fuels, oils, and aging at elevated temperatures.

In one embodiment, the cured fluorosilicone elastomer has a tensile strength of at least 7 MPa and an elongation of at least 200 %.

The cured fluorosilicone elastomers produced by the present method are useful in a variety of applications such as to construct various articles of manufacture illustrated by but not limited to O-rings, gaskets, connectors, seals, liners, hoses, tubing, diaphragms, boots, valves, belts, blankets, coatings, rollers, moulded goods, extruded sheet, caulks, and extruded articles, for use in applications areas which include but not are limited to transportation including automotive, watercraft, and aircraft; chemical and petroleum plants; electrical: wire and cable: food processing equipment; nuclear power plants; aerospace; medical applications; and the oil and gas drilling industry and other applications.

The cured fluorosilicone elastomer produced by the present method exhibits improved retention of physical properties after exposure to hot fuel, hot oil, and elevated temperatures. The fluorinated silicone elastomer is useful in applications such as hoses, gaskets, diaphragms, belts, coatings, and seals which are exposed to fuel, lubricating oils, and elevated temperatures such as those found in automobile engines.

The cured fluorosilicone elastomers produced by the present method are particularly useful for o-rings, connectors, and to prepare hoses, especially turbo diesel engine hoses, for use in automotive and truck engines. Typically, turbocharger hoses are constructed of layers of silicone rubber (VMQ) and reinforcing fabric with an inner liner of a fluoroelastomer (FVMQ). The cured fluorosilicone elastomer produced by the present method are particularly useful materials for construction of inner liners of turbocharger hoses.

### EXAMPLES

These examples are intended to illustrate the invention to one of ordinary skill in the art.

All measurements and experiments were conducted at 23°C, unless indicated otherwise. All parts are parts by weight, unless indicated otherwise.

| **Materials** | **Description** |
|---|---|
| LS-2840 | LS-2840 is a fluorosilicone elastomer base marketed by Dow Corning Corporation (Midland, MI) as Silastic® LS-2840 Fluorosilicone Rubber |
| LS-2380U | LS-2380U is a fluorosilicone elastomer base marketed by Dow Corning Corporation (Midland, MI) as Silastic® LS-2380 U Fluorosilicone Rubber |
| 4-4736 | 4-4736 is a silicone rubber marketed by Dow Corning Corporation (Midland, MI) as Silastic® 4-4736 Silicone Rubber. |
| CaCO₃ | Calcium carbonate (CaCO₃) as OMYA BLP® 3 (OMYA, Orgon France) |
| CaO MB | Silastic M-B 2600C/S - a masterbatch of 50wt% CaO as RHENOFIT C (Lanxess Corp) in dimethylsilicone rubber carrier |
| Ca(OH)₂ | Calcium Hydroxide as Fluorox E (OMYA, UK) |
| MgCO₃ | Heavy basic grade from Fisher Scientific UK Ltd (Loughborough, UK) |
| FeO(OH) | Yellow iron oxide used as provided as Bayferrox 3920 (Lanxess Corp) |
| FeO(OH) - B | Yellow iron oxide used as provided as Cappoxyt 4214X (Cappelle Pigments NV, Belgium) |
| Fe₂O₃ MB | S 2400 Red 2 MB - a masterbatch of 50wt% iron oxide, as Bayferrox 130 BM Red Iron Oxide Pigment (Lanxess Corp.), in a dimethyl silicone rubber carrier and is marketed by Dow Corning Silastic ® S2400 Red 2 Colour Masterbatch |
| Fe₂O₃ MB - B | a masterbatch of 50wt% iron oxide, as Bayferrox 110 M Fe₂O₃ Red Iron Oxide Pigment (Lanxess Corp.), in a fluorosilicone elastomer base |
| CB | Carbon black used as provided as SR 511 (Sid Richardson Carbon & Energy Co) |
| HT-1 MB | HT-1 MB is a masterbatch of 50wt% cerium hydroxide in a dimethyl silicone rubber carrier and is marketed by Dow Corning Corporation (Midland, MI) as Silastic® HT-1 Modifier. |
| AP MB | SYL-OFF ® Q2-7560 Crosslinker mixed with 2wt% silica |
| DHBP | 2,5-dimethyl-2,5-di(tert-butylperoxy)hexane, 45wt% in silicone oil (Noviper DH45, NOVICHEM Sp. z o.o. Poland) |
| DCP | Dicumyl peroxide, 40wt% in silicone oil (Perkadox BC-40S-PS, Akzo Nobel N. V.) |

### Compounding

All components were weighed using a 2 place laboratory balance to within 2% of their target weight. A laboratory two roll mixer was used to mix all formulations and the master batches that were prepared. The mill was unheated and the temperature of any material that was mixed was always kept below 50°C.

Master batches of the Bayferrox 3920 (hereafter referred to as 3920), SR-511, and OMYA BLP® 3 (hereafter referred to as BLP 3) powders were first mixed, using a bowl mixer (Brabender). This was done to assure a good dispersion of the powders prior to their introduction into the test formulations. Silastic® LS-2840 Fluorosilicone Rubber (hereafter referred to as LS-2840) was used as the carrier for these master batches. Since it was a main component of all formulations, any LS-2840 that was introduced into a formulation as part of one or more of the master batches was accounted for, and effectively reduced the amount of neat LS-2840 that was needed.

All test formulations were also compounded using a laboratory two roll mill. The main FSR component of all the test formulations was added first and allowed to band on the faster roll. All other components were then added, except the peroxide, and allowed to mix in until incorporated. The material was then cut from the roll, rolled up and fed back through the rolls to band again around the roll. The material was then cut off, fed through, and allowed to band the same way 4-6 more times.

The material was then fed back into the mill again and allowed to band. The peroxide was then added and allowed to mix until incorporated. The material was then cut from the roll, rolled up and fed back through the rolls to band again around the roll. The material was then cut off, fed through, and allowed to band the same way 9 more times. The material was then passed through the mill using a wider nip gap to obtain a continuous sheet of material approximately 2.5 mm thick, more suitable for moulding.

### Moulding

Test slabs were prepared using metal moulds to give sheets that were approximately 192 x 192 mm square, the upper portion of the test slab forming a rectangle 48 x 192 mm was 6 mm thick whilst the remainder of the test slab was 2 mm thick. Depending on the density of the material to be moulded sufficient material was taken to fully fill the mold. Test slabs were prepared at 170 °C in a heated press.

At the end of the 10 minutes the material would promptly be removed from the mold and allowed to cool on a cold steel bench. After cooling the identification number and moulding conditions were written on the slabs and a light coating of talc dusted over the surface to prevent the slab from sticking to itself or other slabs during testing.

### Test methods

All materials were post cured for 4 hours at a temperature of 200°C in a circulating hot air oven before testing

### Hardness

Dow Corning Corporate Test Method 0099, based on ASTM D 2240-00 was used. For initial properties the hardness was the median of five measurements on the 6 mm thick section of the test slab. For heat aging a single measurement was made on 3 x 2mm plied test pieces before and after aging, in most cases small differences in the initial hardness were observed between plied test pieces and the 6 mm thick test slab. Thus in the examples the aged hardness minus the hardness change generally does not equal the initial hardness shown.

### Tensile strength, Elongation at Break (EB) and Modulus

Dow Corning Corporate Test Method 0137A, based on DIN 53 504 - May 1994 using S2 type test pieces with the exception that the rate of grip separation was 500 mm/min. Results reported are the median of 3 measurements.

### Heat aging

Test specimens were prepared as for normal testing. They were then measured for thickness and hung by end in a pre-heated circulating hot air oven for the duration of the specified test period. Specimens were spaced far enough apart to assure good airflow around all sides of each specimen. Specimens were then removed, allowed to cool, and tested within 16-48 hrs according to the tensile and hardness methods using the pre-aged thickness for all property calculations. Heat aging was carried out at 250 °C ± 2.5 °C for 14 days.

### EXAMPLE 1 AND COMPARATIVE EXAMPLE 1

Examples 1a to 1c per the invention comprise yellow iron oxide alone or with calcium carbonate as acid acceptor, as presented in Table 1.

Example 1a shows increased heat stability compared to comparatives without yellow iron oxide as shown by increased tensile strength and elongation at break after heat aging. Examples 1b and 1c show further improvements in heat stability on adding an acid acceptor as well as the yellow iron oxide.

**TABLE 1**

| RUN/parts | Comparative-1a | Comparative-1b | Example-1a | Example-1b | Example-1c |
|---|---|---|---|---|---|
| LS-2840 | 100 | 100 | 100 | 100 | 100 |
| CaCO₃ | | 4 | | 1 | 4 |
| FeO(OH) | | | 2 | 2 | 2 |
| DHBP | 1 | 1 | 1 | 1 | 1 |

| Initial Results | | | | | |
|---|---|---|---|---|---|
| Hardness, Shore A | 41.7 | 40.9 | 45.2 | 38.3 | 40.0 |
| 50% Modulus, MPa | 0.62 | 0.59 | 0.62 | 0.53 | 0.61 |
| 100% Modulus, MPa | 1.00 | 0.97 | 0.97 | 0.82 | 1.02 |
| 200% Modulus, MPa | 2.43 | 2.40 | 2.46 | 2.04 | 2.46 |
| Tensile, MPa | 8.6 | 8.3 | 9.4 | 8.9 | 8.6 |
| EB, % | 476 | 451 | 461 | 473 | 427 |

| After 14d @ 250 °C | | | | | |
|---|---|---|---|---|---|
| Hardness, Shore A | Failed in less than 3 days | Failed in less than 3 days | 47 | 47.3 | 56.3 |
| 50% Modulus, MPa | | | 0.84 | 0.85 | 1.05 |
| 100% Modulus, MPa | | | | 1.39 | 1.81 |
| 200% Modulus, MPa | | | | 2.62 | 3.39 |
| Tensile Strength, MPa | | | 0.9 | 3.0 | 4.4 |
| EB, % | | | 73 | 232 | 265 |

| Changes | | | | | |
|---|---|---|---|---|---|
| Δ Hardness (Shore A) | | | 3 | 8.9 | 14.6 |
| Δ Weight (%) | | | -6.4% | -3.8% | -4.0% |
| Δ 50% Modulus (%) | | | 36% | 60% | 73% |
| Δ 100% Modulus (%) | | | | 69% | 77% |
| Δ 200% Modulus (%) | | | | 28% | 38% |
| Δ Tensile Strength (%) | | | -90% | -66% | -49% |
| Δ EB (%) | | | -84% | -51% | -38% |

### EXAMPLE 2

Table 2 reviews the option of acid acceptors which may be used in combination with yellow iron oxide, such as CaCO₃, CaO, Ca(OH)₂ and MgCO₃.

**TABLE 2**

| Run/parts | Example-2a | Example-2b | Example-2c | Example-2d | Example-2e |
|---|---|---|---|---|---|
| LS-2840 | 100 | 100 | 100 | 100 | 100 |
| CaCO₃ | 2 | 4 | | | |
| CaO | | | 4 | | |
| Ca(OH)₂ | | | | 2 | |
| MgCO₃ | | | | | 2 |
| FeO(OH) | 2 | 2 | 2 | 2 | 2 |
| DCP | 1 | 1 | 1 | 1 | 1 |

| Initial Results | | | | | |
|---|---|---|---|---|---|
| Hardness, Shore A | 42.8 | 41.4 | 45.4 | 41.7 | 44.7 |
| 50% Modulus, MPa | 0.68 | 0.59 | 0.68 | 0.61 | 0.69 |
| 100% Modulus, MPa | 1.07 | 1.05 | 1.06 | 1.01 | 1.15 |
| 200% Modulus, MPa | 2.55 | 2.69 | 2.46 | 2.53 | 2.69 |
| Tensile, MPa | 8.2 | 8.9 | 8.5 | 8.8 | 8.1 |
| EB, % | 428 | 427 | 474 | 445 | 411 |

| After 14d @ 250 °C | | | | | |
|---|---|---|---|---|---|
| Hardness, Shore A | 58.9 | 54.6 | 61.9 | 51.0 | 57.7 |
| 50% Modulus, MPa | 1.24 | 1.09 | 1.40 | 1.18 | 1.24 |
| 100% Modulus, MPa | 1.90 | 1.83 | 2.11 | 1.90 | 1.82 |
| Tensile Strength, MPa | 2.8 | 4.3 | 2.9 | 3.2 | 2.2 |
| EB, % | 166 | 245 | 155 | 195 | 132 |

| Changes | | | | | |
|---|---|---|---|---|---|
| Δ Hardness (Shore A) | 13.4 | 10.6 | 15.8 | 10 | 13.5 |
| Δ Weight (%) | -4.6% | -4.9% | -5.9% | -6.3% | -5.6% |
| Δ 50% Modulus (%) | 82% | 83% | 105% | 95% | 79% |
| Δ 100% Modulus (%) | 78% | 74% | 100% | 87% | 59% |
| Δ Tensile Strength (%) | -65% | -52% | -66% | -63% | -73% |
| Δ EB (%) | -61% | -43% | -67% | -56% | -68% |

### EXAMPLE 3 AND COMPARATIVE EXAMPLE 3

Example 3 according to the invention shows improved performance as shown by higher tensile strength and elongation at break after aging plus lower modulus values after aging compared to Comparative example 3a which comprises carbon black in addition to the yellow iron oxide and acid acceptor calcium carbonate as taught in EP2155823, and Comparative example 3c which is free of yellow iron oxide but which comprises red iron oxide and cerium hydroxide as taught in US5340866. All compositions (parts by weight) are disclosed in Table 3.

**TABLE 3**

| Run/parts | Example-3 | Comparative-3a | Comparative-3c |
|---|---|---|---|
| LS-2840 | 100 | 100 | 100 |
| CaCO₃ | 4 | 4 | 4 |
| FeO(OH) | 2 | 2 | |
| Fe₂O₃ MB | | | 4 |
| CB | | 4 | |
| HT-1 | | | 1 |
| DCP | 1 | 1 | 1 |

| Initial Results | | | |
|---|---|---|---|
| Hardness, Shore A | 41.4 | 45.5 | 41.3 |
| 50% Modulus, MPa | 0.59 | 0.71 | 0.60 |
| 100% Modulus, MPa | 1.05 | 1.27 | 1.00 |
| 200% Modulus, MPa | 2.69 | 3.20 | 2.56 |
| Tensile, MPa | 8.9 | 8.0 | 9.8 |
| EB, % | 427 | 402 | 470 |

| After 14d @ 250 °C | | | |
|---|---|---|---|
| Hardness, Shore A | 54.6 | 60.8 | 52 |
| 50% Modulus, MPa | 1.09 | 1.34 | 1.14 |
| 100% Modulus, MPa | 1.83 | 2.17 | 2.09 |
| Tensile Strength, MPa | 4.3 | 3.8 | 3.8 |
| EB, % | 245 | 203 | 191 |

| Changes | | | |
|---|---|---|---|
| Δ Hardness (Shore A) | 10.6 | 15.2 | 9.5 |
| Δ Weight (%) | -4.9% | -6.0% | -4.0% |
| Δ 50% Modulus (%) | 83% | 89% | 88% |
| Δ 100% Modulus (%) | 74% | 70% | 109% |
| Δ Tensile Strength (%) | -52% | -53% | -61% |
| Δ EB (%) | -43% | -50% | -59% |

### EXAMPLE 4 AND COMPARATIVE EXAMPLE 4

Example 4 shows improved performance for the current invention in the presence of optional adhesion promoter (AP MB) as shown by higher tensile strength and elongation at break after aging plus lower modulus values after aging, compared to Comparative example 4 using a combination of red iron oxide and cerium hydroxide as taught in US5340866. All compositions (parts by weight) are disclosed in Table 4.

**TABLE 4**

| Run/parts | Example-4 | Comparative-4 |
|---|---|---|
| LS-2840 | 100 | 100 |
| CaCO₃ | 4 | 4 |
| FeO(OH) | 2 | |
| Fe₂O₃ MB | | 4 |
| HT-1 | | 1 |
| AP MB | 2 | 2 |
| DCP | 1 | 1 |

| Initial Results | | |
|---|---|---|
| Hardness, Shore A | 37.7 | 38.5 |
| 50% Modulus, MPa | 0.50 | 0.55 |
| 100% Modulus, MPa | 0.81 | 0.85 |
| 200% Modulus, MPa | 1.88 | 2.01 |
| Tensile, MPa | 8.0 | 7.5 |
| EB, % | 506 | 479 |

| After 14d @ 250°C | | |
|---|---|---|
| Hardness, Shore A | 51.4 | 57.9 |
| 50% Modulus, MPa | 1.00 | 1.24 |
| 100% Modulus, MPa | 1.76 | 2.08 |
| Tensile Strength, MPa | 3.9 | 3.8 |
| EB, % | 232 | 200 |

| Changes | | |
|---|---|---|
| Δ Hardness (Shore A) | 10.6 | 17.6 |
| Δ Weight (%) | -4.3% | -4.22% |
| Δ 50% Modulus (%) | 100% | 125% |
| Δ 100% Modulus (%) | 119% | 144% |
| Δ Tensile Strength (%) | -51% | -50% |
| Δ EB (%) | -54% | -58% |

### EXAMPLES 5 AND 6 AND COMPARATIVE EXAMPLES 5 AND 6

Examples 5 and 6 show that cerium hydroxide (HT-1) can be added to the yellow iron oxide while providing equivalent performance. In either case, that is with or without cerium hydroxide, the performance of the yellow iron oxide is better than that obtained with the red iron oxide (Fe₂O₃ MB) in Comparative examples 5 and 6. All compositions (parts by weight) are disclosed in Table 5.

**TABLE 5**

| Run/parts | Example 5 | Example 6 | Comparative 5 | Comparative 6 |
|---|---|---|---|---|
| LS-2840 | 100 | 100 | 100 | 100 |
| CaCO₃ | 4 | 4 | 4 | 4 |
| FeO(OH) | 2 | 2 | | |
| Fe₂O₃ MB | | | 4 | 4 |
| HT-1 | | 0.5 | | 0.5 |
| DHBP | 1 | 1 | 1 | 1 |

| Initial Results | | | | |
|---|---|---|---|---|
| Hardness, Shore A | 40.0 | 42 | 39.5 | 41.2 |
| 50% Modulus, MPa | 0.61 | 0.66 | 0.59 | 0.64 |
| 100% Modulus, MPa | 1.02 | 1.14 | 0.99 | 1.09 |
| 200% Modulus, MPa | 2.46 | 2.72 | 2.35 | 2.61 |
| Tensile, MPa | 8.6 | 8.5 | 7.8 | 7.9 |
| EB, % | 427 | 423 | 431 | 422 |

| Alter 14d @ 250 °C | | | | |
|---|---|---|---|---|
| Hardness | 56.3 | 55.6 | 52.6 | 58 |
| 50% Modulus, MPa | 1.05 | 1.21 | 1.34 | 1.24 |
| 100% Modulus, MPa | 1.81 | 2.09 | 2.12 | 2.15 |
| Tensile Strength, MPa | 4.4 | 4.2 | 3.1 | 3.4 |
| EB, % | 265 | 222 | 172 | 175 |

| Changes | | | | |
|---|---|---|---|---|
| Δ Hardness (Shore A) | 14.6 | 12.6 | 9.9 | 13.9 |
| Δ Weight (%) | -4.03% | -4.00% | -5.0% | -4.61% |
| Δ 50% Modulus (%) | 73.3% | 83.3% | 125.5% | 94.4% |
| Δ 100% Modulus (%) | 76.7% | 83.2% | 114.6% | 98.3% |
| Δ Tensile Strength (%) | -49.4% | -51.2% | -60.0% | -57.0% |
| Δ EB (%) | -37.9% | -47.5% | -60.1 % | -58.5% |

### EXAMPLES 7 AND 8 AND COMPARATIVE EXAMPLES 7 AND 8

Examples 7 and 8 further show that cerium hydroxide (HT-1) can be added to the yellow iron oxide while providing equivalent performance. The performance of the yellow iron oxide is significantly better than that obtained with the red iron oxide (Fe₂O₃ MB) in Comparative examples 7 and 8. All compositions (parts by weight) are disclosed in Table 6.

**TABLE 6**

| Run/parts | Example-7 | Example -8 | Comparative-7 | Comparative-8 |
|---|---|---|---|---|
| LS-2840 | 100 | 100 | 100 | 100 |
| CaCO₃ | 4 | 4 | 4 | 4 |
| FeO(OH) | 1 | 1 | | |
| Fe₂O₃ MB | | | 2 | 2 |
| HT-1 | 0.25 | 1 | 0.25 | 1 |
| DHBP | 1 | 1 | 1 | 1 |

| Initial Results | | | | |
|---|---|---|---|---|
| Hardness, Shore A | 40.7 | 40.0 | 40.6 | 41.8 |
| 50% Modulus, MPa | 0.63 | 0.59 | 0.55 | 0.60 |
| 100% Modulus, MPa | 1.07 | 1.00 | 0.92 | 1.01 |
| 200% Modulus, MPa | 2.54 | 2.44 | 2.38 | 2.64 |
| Tensile, MPa | 8.2 | 8.6 | 8.6 | 8.7 |
| EB, % | 416 | 437 | 446 | 428 |

| After 14d @ 250 °C | | | | |
|---|---|---|---|---|
| Hardness | 54.9 | 54.2 | 62 | 58 |
| 50% Modulus, MPa | 1.14 | 1.10 | 1.52 | 1.34 |
| 100% Modulus, MPa | 1.98 | 1.93 | 2.40 | 2.16 |
| Tensile Strength, MPa | 4.2 | 4.1 | 2.8 | 3.3 |
| EB, % | 224 | 233 | 126 | 171 |

| Changes | | | | |
|---|---|---|---|---|
| Δ Hardness (Shore A) | 11.5 | 12 | 18.8 | 13.2 |
| Δ Weight (%) | -4.02% | -4.07% | -5.9% | -4.8% |
| Δ 50% Modulus (%) | 80.3% | 87.9% | 177% | 124% |
| Δ 100% Modulus (%) | 85.0% | 92.7% | 161% | 114% |
| Δ Tensile Strength (%) | -49.0% | -51.7% | -67% | -62% |
| Δ EB (%) | -46.2% | -46.7% | -72% | -60% |

### EXAMPLE 9 AND COMPARATIVE EXAMPLE 9

Example 9 shows that the combination acid acceptor (calcium carbonate) and yellow iron oxide is not necessarily positively impacted by the presence of carbon black such as in Comparative example 9A.

Further, Example 9 with calcium carbonate and yellow iron oxide shows a significantly better performance than the combination of calcium carbonate, red iron oxide and carbon black, such as taught in EP2155823, per Comparative examples 9B and 9C, in terms of tensile strength and elongation at break for aged samples.

All compositions (parts by weight) are disclosed in Table 7.

**TABLE 7**

| Run/parts | Example-9 | Comparative-9A | Comparative-9B | Comparative-9C |
|---|---|---|---|---|
| LS-2840 | 50 | 50 | 50 | 50 |
| LS-2380 U | 50 | 50 | 50 | 50 |
| CaCO₃ | 4 | 4 | 4 | 4 |
| FeO(OH) | 2 | 2 | | |
| Fe₂O₃ MB | | | 4 | 4 |
| CB MB | | 4 | | 4 |
| HT-1 | | | 1 | 1 |
| DCP | 1 | 1 | 1 | 1 |

| Initial Results | | | | |
|---|---|---|---|---|
| Hardness, Shore A | 56.3 | 60.5 | 56.4 | 59.1 |
| 50% Modulus, MPa | 1.18 | 1.42 | 1.19 | 1.32 |
| 100% Modulus, MPa | 2.27 | 2.77 | 2.26 | 2.44 |
| 200% Modulus, MPa | 5.56 | 6.12 | 5.48 | 5.51 |
| Tensile, MPa | 9.3 | 8.6 | 10.3 | 8.8 |
| EB, % | 309 | 288 | 335 | 313 |

| Alter 14d @ 250 °C | | | | |
|---|---|---|---|---|
| Hardness | 61.4 | 67.9 | 68 | 70.6 |
| 50% Modulus, MPa | 2.03 | 2.48 | 2.00 | 1.96 |
| 100% Modulus, MPa | 3.28 | 3.71 | 3.34 | 3.07 |
| Tensile Strength, MPa | 5.0 | 4.9 | 4.3 | 4.1 |
| EB, % | 164 | 151 | 150 | 147 |

| Changes | | | | |
|---|---|---|---|---|
| Δ Hardness (Shore A) | 3.6 | 7.2 | 11.2 | 11.6 |
| Δ Weight (%) | -4.4% | -5.6% | -4.9% | -4.9% |
| Δ 50% Modulus (%) | 73% | 75% | 67.8% | 48.8% |
| Δ 100% Modulus (%) | 45% | 34% | 47.9% | 25.8% |
| Δ Tensile Strength (%) | -46% | -43% | -57.6% | -53.4% |
| Δ EB (%) | -47% | -48% | -55.2% | -53.0% |

### EXAMPLES 10 AND 11 AND COMPARATIVE EXAMPLES 10 AND 11

Examples 10 and 11 further show that cerium hydroxide (HT-1) is not mandatory to achieve excellent performance in a cured fluorosilicone elastomer containing yellow iron oxide. The performance of the yellow iron oxide is again significantly better than that obtained with red iron oxide in Comparative examples 10 and 11. All compositions (parts by weight) are disclosed in Table 8.

**TABLE 8**

| Run/parts | Example-10 | Example -11 | Comparative-10 | Comparative-11 |
|---|---|---|---|---|
| LS-2840 | 100 | 100 | 100 | 100 |
| CaCO₃ | 1 | 1 | 1 | 1 |
| FeO(OH) - B | 2 | 2 | | |
| Fe₂O₃ MB - B | | | 4 | 4 |
| HT-1 | | 0.5 | | 0.5 |
| DHBP | 1 | 1 | 1 | 1 |

| Initial Results | | | | |
|---|---|---|---|---|
| Hardness, Shore A | 38.4 | 40.3 | 39 | 39 |
| 50% Modulus, MPa | 0.53 | 0.54 | 0.50 | 0.57 |
| 100% Modulus, MPa | 0.88 | 0.93 | 0.81 | 0.94 |
| 200% Modulus, MPa | 2.49 | 2.49 | 2.18 | 2.49 |
| Tensile, MPa | 9.0 | 8.8 | 9.0 | 9.6 |
| EB, % | 435 | 428 | 455 | 451 |

| After 14d @ 250 °C | | | | |
|---|---|---|---|---|
| Hardness | 49.9 | 53.6 | 45.9 | 52.6 |
| 50% Modulus, MPa | 0.89 | 0.96 | 0.78 | 0.99 |
| 100% Modulus, MPa | 1.48 | 1.67 | 1.18 | 1.65 |
| Tensile Strength, MPa | 4.3 | 4.2 | 1.5 | 1.6 |
| EB, % | 274 | 230 | 165 | 99 |

| Changes | | | | |
|---|---|---|---|---|
| Δ Hardness (Shore A) | 9.4 | 11.2 | 11.7 | 12.7 |
| Δ Weight (%) | -4% | -4% | -4% | -5% |
| Δ 50% Modulus (%) | 67% | 79% | 57% | 75% |
| Δ 100% Modulus (%) | 68% | 80% | 46% | 76% |
| Δ Tensile Strength (%) | -52% | -52% | -83% | -83% |
| Δ EB (%) | -37% | -46% | -64% | -78% |

## Claims

1. A method for improving the heat stability or heat resistance of a cured fluorosilicone elastomer comprising:
I) mixing a stabilizer with a fluorosilicone elastomer base and a cure agent, to form a curable fluorosilicone elastomer composition wherein the fluorosilicone elastomer base comprises:
A1) a perfluoroalkyl polydiorganopolysiloxane,
A2) a reinforcing filler,
A3) an optional non fluorinated polydiorganopolysiloxane
A4) an optional cerium hydroxide or cerium hydrate, and
A5) an optional adhesion promoter; and
said stabilizer comprises;
B1) yellow iron oxide, and
B2) optionally, an acid acceptor,
II) vulcanizing the fluorosilicone elastomer composition containing the stabilizer.

2. The method of claim 1 wherein the acid acceptor is selected from the group consisting of Group II metal carbonate, Group II metal oxide, Group II metal hydroxide, or mixtures thereof.

3. The method of any of the preceding claims wherein the acid acceptor is selected from the group comprising magnesium carbonate, calcium carbonate, calcium oxide, calcium hydroxide, or mixtures thereof.

4. The method of any of the preceding claims wherein the yellow iron oxide is an iron oxyhydroxide represented by formula:
FeO^{∗}OH
or
FeO(OH)^{∗}mH₂O,
wherein m is a positive number.

5. The method of any of the preceding claims wherein the stabilizer comprises:
5 to 100 % weight of B1) yellow iron oxide and optionally,
0 to 95 % weight B2) acid acceptor.

6. The method of Claim 5 where the adhesion promoter A5 is selected from a fluoro-modified organohydrogenpolysiloxane having the average formula
(Me₃SiO)(MeHSiO)ₓ(R^{f}CH₂CH₂(Me)SiO)_{y}(SiMe₃)
where x and y is from 1 to 200,
Me is methyl, and
R^{f} is a perfluoroalkyl group containing 1 to 10 carbon atoms.

7. The method of any preceding claim wherein the curable fluorosilicone elastomer composition comprises:
A) 67 - 99.4 weight % of the fluorosilicone elastomer base,
B) 0.5 - 30 weight % of the stabilizer comprising;
B1) yellow iron oxide and
B2) optionally, an acid acceptor,
C) 0.1 - 3 wt% of a cure agent,
with the proviso the wt % of all components sum to 100 wt %.

8. The method of any preceding claim wherein the curable fluorosilicone elastomer composition comprises:
A1) 27.5 to 96.9 weight % of perfluoroalkyl polydiorganopolysiloxane,
A2) 2.5 to 47.5 weight % of reinforcing filler,
A3) optionally 0.1 to 10 weight % of non fluorinated polydiorganopolysiloxane,
A4) optionally 0.1 to 10 weight % of cerium hydroxide or cerium hydrate,
A5) optionally 0.1 to 5 weight % of adhesion promoter
and
B1) 0.5 to 30 weight % of yellow iron oxide,
B2) 0 to 27 weight % of acid acceptor,
C) 0.1 - 3 weight % of cure agent,
with the proviso the wt % of all components sum to 100 wt %.

9. The method of any preceding claim wherein the mixing of each stabilizer component (B1 and optionally B2) with the fluorosilicone elastomer base is undertaken by introducing one or both stabilizer components (B1 and optionally B2) individually or in combination into one (or more) portion(s) of the fluorosilicone elastomer base component to form one (or more) masterbatch(es), and subsequently adding the or each masterbatch into the remainder of the fluorosilicone elastomer composition.

10. The cured fluorosilicone elastomer prepared by the method of any one of claims 1 to 9.

11. The cured fluorosilicone elastomer of claim 10 wherein the cured fluorosilicone elastomer has a tensile strength of at least 7 MPa and an elongation of at least 200 %.

12. An article of manufacture comprising the cured fluorosilicone elastomer of any one of claims 10 or 11.

13. The article of manufacture of claim 12 wherein said article is selected from O-rings, gaskets, seals, liners, hoses, tubing, diaphragms, boots, valves, belts, blankets, coatings, rollers, moulded goods, extruded sheet, caulks, and extruded articles.

14. A hose construction comprising an inner liner containing the cured fluorosilicone elastomer of any one of claims 10 or 11.

15. Use of a stabilizer comprising
B1) yellow iron oxide, and
B2) optionally, an acid acceptor,
in a method for improving the heat stability or heat resistance of a cured fluorosilicone elastomer comprising:
I) mixing the stabilizer with a fluorosilicone elastomer base and a cure agent, to form a curable fluorosilicone elastomer composition wherein the fluorosilicone elastomer base comprises:
A1) a perfluoroalkyl polydiorganopolysiloxane,
A2) a reinforcing filler,
A3) an optional non fluorinated polydiorganopolysiloxane
A4) an optional cerium hydroxide or cerium hydrate, and
A5) an optional adhesion promoter; and
II) vulcanizing the fluorosilicone elastomer composition containing the stabilizer.

## Patentansprüche

1. Verfahren zum Verbessern der Hitzestabilität oder Hitzebeständigkeit eines gehärteten Fluorsilikonelastomers, Folgendes umfassend:
I) Mischen eines Stabilisators mit einer Fluorsilikonelastomerbasis und einem Härtungsmittel, um eine härtbare Fluorsilikonelastomerzusammensetzung zu bilden, wobei die Fluorsilikonelastomerbasis Folgendes umfasst:
A1) ein Perfluoralkylpolydiorganopolysiloxan,
A2) einen Verstärkungsfüllstoff,
A3) ein optionales nicht fluoriertes Polydiorganopolysiloxan A4) ein optionales Cerhydroxid oder Cerhydrat, und
A5) einen optionalen Haftvermittler; und
der Stabilisator Folgendes umfasst:
B1) gelbes Eisenoxid, und
B2) optional einen Säureakzeptor,
II) Vulkanisieren der den Stabilisator enthaltenden Fluorsilikonelastomerzusammensetzung.

2. Verfahren nach Anspruch 1, wobei der Säureakzeptor aus der Gruppe bestehend aus Carbonat eines Metalls der Gruppe II, Oxid eines Metalls der Gruppe II, Hydroxid eines Metalls der Gruppe II oder Mischungen dieser ausgewählt ist.

3. Verfahren nach einem der vorhergehenden Ansprüche, wobei der Säureakzeptor aus der Gruppe, die Magnesiumcarbonat, Kalziumcarbonat, Kalziumoxid, Kalziumhydroxid oder Mischungen dieser umfasst, ausgewählt ist.

4. Verfahren nach einem der vorangehenden Ansprüche, wobei das gelbe Eisenoxid ist ein Eisenoxyhydroxid ist, dass durch folgende Formel dargestellt wird:
FeO^{∗}OH
oder
FeO(OH)^{∗}mH₂O,
wobei m eine positive Zahl ist.

5. Verfahren nach einem der vorhergehenden Ansprüche, wobei der Stabilisator Folgendes umfasst:
5 bis 100 Gew.-% B1) gelbes Eisenoxid und optional 0 bis 95 Gew.-% B2) Säureakzeptor.

6. Verfahren nach Anspruch 5, wobei der Haftvermittler A5 aus einem fluormodifizierten Organohydrogenpolysiloxan mit der durchschnittlichen Formel (Me₃SiO)(MeHSiO)ₓ(R^{f}CH₂C)H₂(Me)SiO)_{y}(SiOe₃) ausgewählt ist, wobei x und y im Bereich von 1 bis 200 liegen, Me Methyl ist und R^{f} eine Perfluoralkylgruppe mit 1 bis 10 Kohlenstoffatomen ist

7. Verfahren nach einem der vorangehenden Ansprüche, wobei die härtbare Fluorsilikonelastomerzusammensetzung Folgendes umfasst;
A) 67 bis 99,4 Gew.-% der Fluorsilikonelastomerbasis,
B) 0,5 bis 30 Gew.-% des Stabilisators, Folgendes umfassend:
B1) gelbes Eisenoxid und
B2) optional einen Säureakzeptor,
C) 0,1 bis 3 Gew.-% eines Härtungsmittels, mit der Maßgabe, dass sich die Gew.-% aller Bestandteile auf 100 Gew.-% summieren.

8. Verfahren nach einem der vorangehenden Ansprüche, wobei die härtbare Fluorsilikonelastomerzusammensetzung Folgendes umfasst:
A1) 27,5 bis 96,9 Gew.-% Perfluoralkylpolydiorganopolysiloxan,
A2) 2,5 bis 47,5 Gew.-% Verstärkungsfüllstoff,
A3) optional 0,1 bis 10 Gew.-% nicht fluoriertes Polydiorganopolysiloxan,
A4) optional 0,1 bis 10 Gew.-% Cerhydroxid oder Cerhydrat,
A5) optional 0,1 bis 5 Gew.-% Haftvermittler und
B1) 0,5 bis 30 Gew.-% gelbes Eisenoxid,
B2) 0 bis 27 Gew.-% Säureakzeptor,
C) 0,1 bis 3 Gew.-% Härtungsmittel, mit der Maßgabe, dass sich die Gew.-% aller Bestandteile auf 100 Gew.-% summieren.

9. Verfahren nach einem der vorangehenden Ansprüche, wobei das Mischen der einzelnen Stabilisatorbestandteile (B1 und optional B2) mit der Fluorsflikonelastomerbasis durch einzelnes oder kombiniertes Einbringen eines oder beider Stabilisatorbestandteile (B1 und optional B2) in einen (oder mehrere) Teil(e) der Fluorsilikonelastomerbasisbestandteil(e) zum Bilden eines (oder mehrerer) Masterbatch(es) und anschließendes Zugeben des oder aller Masterbatches zu dem Rest der Fluorsilikonelastomerzusammensetzung erfolgt.

10. Gehärtetes Fluorsilikonelastomer, das durch das Verfahren nach einem der Ansprüche 1 bis 9 hergestellt wird.

11. Gehärtetes Fluorsilikonelastomer nach Anspruch 10, wobei das gehärtete Fluorsilikonelastomer eine Zugfestigkeit von mindestens 7 MPa und eine Dehnung von mindestens 200 % aufweist.

12. Erzeugnis, das gehärtete Fluorsilikonelastomer nach einem der Ansprüche 10 oder 11 umfassend.

13. Erzeugnis nach Anspruch 12, wobei das Erzeugnis aus O-Ringen, Flachdichtungen, Dichtungen, Einlagen, Schläuchen, Rohren, Membranen, Manschetten, Ventilen, Riemen, Bahnen, Beschichtungen, Walzen, Formteilen, extrudierter Folie, Dichtmassen und extrudierten Erzeugnissen ausgewählt ist.

14. Schlauchkonstruktion, eine Einlage umfassend, die das gehärtete Fluorsilikonelastomer nach einem der Ansprüche 10 oder 11 enthält.

15. Verwendung eines Stabilisators, Folgendes umfassend:
B1) gelbes Eisenoxid, und
B2) optional einen Säureakzeptor bei einem Verfahren zur Verbesserung der Hitzestabilität oder Hitzebeständigkeit eines gehärteten Fluorsilikonelastomers, Folgendes umfassend:
I) Mischen des Stabilisators mit einer Fluorsilikonelastomerbasis und einem Härtungsmittel, um eine härtbare Fluorsilikonelastomerzusammensetzung zu bilden, wobei die Fluorsilikonelastomerbasis Folgendes umfasst:
A1) ein Perfluoralkylpolydiorganopolysiloxan,
A2) einen Verstärkungsfüllstoff,
A3) ein optionales nicht fluoriertes Polydiorganopolysiloxan A4) ein optionales Cerhydroxid oder Cerhydrat, und
A5) einen optionalen Haftvermittler; und
II) Vulkanisieren der den Stabilisator enthaltenden Fluorsilikonelastomerzusammensetzung.

## Revendications

1. Procédé destiné à l'amélioration de la thermostabilité ou de la thermorésistance d'un élastomère de fluorosilicone durci, comprenant :
I) le mélange d'un stabilisant avec une base d'élastomère de fluorosilicone et un agent de durcissement, pour former une composition d'élastomère de fluorosilicone durcissable dans laquelle la base d'élastomère de fluorosilicone comprend :
A1) un perfluoroalkyle polydiorganopolysiloxane,
A2) une charge renforçante,
A3) un polydiorganopolysiloxane non fluoré facultatif,
A4) un hydroxyde de cérium ou un hydrate de cérium facultatif, et
A5) un promoteur d'adhésion facultatif ; et
ledit stabilisant comprend :
B1) de l'oxyde de fer jaune, et
B2) éventuellement, un accepteur d'acide,
II) la vulcanisation de la composition d'élastomère de fluorosilicone contenant le stabilisant.

2. Procédé selon la revendication 1, dans lequel l'accepteur d'acide est choisi dans le groupe constitué par le carbonate de métal du groupe II, l'oxyde de métal du groupe II, l'hydroxyde de métal du groupe II et leurs mélanges.

3. Procédé selon l'une des revendications précédentes, dans lequel l'accepteur d'acide est choisi dans le groupe constitué par le carbonate de magnésium, le carbonate de calcium, l'oxyde de calcium, l'hydroxyde de calcium ou leurs mélanges.

4. Procédé selon l'une des revendications précédentes, dans lequel l'oxyde de fer jaune est un oxyhydroxyde de fer représenté par la formule :
FeO^{∗}OH
ou
FeO(OH)^{∗}mH₂O,
dans laquelle m est un nombre positif.

5. Procédé selon l'une des revendications précédentes, dans lequel le stabilisant comprend :
5 à 100 % en poids de B1), l'oxyde de fer jaune, et éventuellement, 0 à 95 % en poids de B2), l'accepteur d'acide.

6. Procédé selon la revendication 5, dans lequel le promoteur d'adhésion A5 est choisi dans un organohydrogénopolysiloxane modifié au fluor ayant la formule moyenne (Me₃SiO)(MeHSiO)ₓ(R^{f}CH₂CH₂(Me)SiO)_{y}(SiMe₃) où x et y sont compris entre 1 et 200 ; Me est du méthyle et R^{f} est un groupe perfluoroalkyle contenant 1 à 10 atomes de carbone.

7. Procédé selon l'une des revendications précédentes, dans lequel la composition d'élastomère de fluorosilicone durcissable comprend :
A) 67 à 99,4 % en poids de la base d'élastomère de fluorosilicone,
B) 0,5 à 30 % en poids du stabilisant, comprenant :
B1) de l'oxyde de fer jaune, et
B2) éventuellement, un accepteur d'acide,
C) 0,1 à 3 % en poids d'un agent de durcissement, à la condition que le pourcentage en poids de tous les composants soit égal à 100 % en poids.

8. Procédé selon l'une des revendications précédentes, dans lequel la composition d'élastomère de fluorosilicone durcissable comprend :
A1) 27,5 à 96,9 % en poids de perfluoroalkyle polydiorganopolysiloxane,
A2) 2,5 à 47,5 % en poids de charge renforçante,
A3) éventuellement 0,1 à 10 % en poids de polydiorganopolysiloxane non fluoré,
A4) éventuellement 0,1 à 10 % en poids d'hydroxyde de cérium ou d'hydrate de cérium,
A5) éventuellement 0,1 à 5 % en poids de promoteur d'adhésion ; et
B1) 0,5 à 30 % en poids d'oxyde de fer jaune,
B2) 0 à 27 % en poids d'accepteur d'acide,
C) 0,1 à 3 % en poids d'un agent de durcissement, à la condition que le pourcentage en poids de tous les composants soit égal à 100 % en poids.

9. Procédé selon l'une des revendications précédentes, dans lequel le mélange de chaque composant stabilisant (B1 et éventuellement B2) avec la base d'élastomère de fluorosilicone est effectué en introduisant un ou les deux composants stabilisants (B1 et éventuellement B2) individuellement ou en combinaison dans une (ou plusieurs) partie(s) du composant de base d'élastomère de fluorosilicone pour former un (ou plusieurs) mélange(s)-maître(s), puis en ajoutant le ou chaque mélange-maître dans le reste de la composition d'élastomère de fluorosilicone.

10. Elastomère de fluorosilicone durci, préparé par le procédé selon l'une quelconque des revendications 1 à 9.

11. Elastomère de fluorosilicone durci selon la revendication 10, dans lequel l'élastomère de fluorosilicone durci présente une résistance à la traction d'au moins 7 MPa et un allongement d'au moins 200 %.

12. Article de fabrication comprenant l'élastomère de fluorosilicone durci selon l'une quelconque des revendications 10 ou 11.

13. Article de fabrication selon la revendication 12, ledit article étant choisi parmi les joints toriques, les garnitures, les joints d'étanchéité, les revêtements, les tuyaux, les tubes, les membranes, les bottes, les vannes, les ceintures, les couvertures, les rouleaux, les produits moulés, les feuilles extrudées, les pâtes et les articles extrudés.

14. Structure tubulaire comprenant un revêtement intérieur contenant l'élastomère de fluorosilicone durci selon l'une quelconque des revendications 10 ou 11.

15. Utilisation d'un stabilisant comprenant
B1) de l'oxyde de fer jaune, et
B2) éventuellement, un accepteur d'acide, dans un procédé destiné à l'amélioration de la thermostabilité ou de la thermorésistance d'un élastomère de fluorosilicone durci comprenant :
I) le mélange d'un stabilisant avec une base d'élastomère de fluorosilicone et un agent de durcissement, pour former une composition d'élastomère de fluorosilicone durcissable dans laquelle la base d'élastomère de fluorosilicone comprend :
A1) un perfluoroalkyle polydiorganopolysiloxane,
A2) une charge renforçante,
A3) un polydiorganopolysiloxane non fluoré facultatif,
A4) un hydroxyde de cérium ou un hydrate de cérium facultatif, et
A5) un promoteur d'adhésion facultatif ; et
II) la vulcanisation de la composition d'élastomère de fluorosilicone contenant le stabilisant.
